# EUROPÄISCHE PATENTANMELDUNG

(11) **EP 0 846 924 A2**
(43) Veröffentlichungstag der Anmeldung: **10.06.1998**
(21) Anmeldenummer: 97890244.3
(22) Anmeldetag: 03.12.1997
(51) Int. Cl.: F24J 2/54, F24J 2/12

(54) **Solarkollektor**

(30) Priorität: 05.12.1996 AT 716/96
(71) Anmelder: Brandstätter, Josef, 4400 Steyr (AT)
(72) Erfinder: Brandstätter, Josef, 4400 Steyr (AT)
(74) Vertreter: Weinzinger, Arnulf, Dipl.-Ing.

(57) **Zusammenfassung**

Solarkollektor (1) mit einem kardanisch gelagerten und automatisch nachführbaren parabolischen Rund-Reflektor (6) zum Bündeln der einfallenden Strahlung auf einen starr angeordneten Absorptionskörper (2), der eine Hohlkugelform aufweist, wobei der Reflektor (6) mit einer Ausnehmung (8) für die Halterung des Absorptionskörpers (2) und den Durchlaß seiner Anschlußleitungen (3, 4) versehen und an einem Kardanlager (7) allseitig schwenkbar befestigt ist.

## Beschreibung

Die Erfindung betrifft einen Solarkollektor gemäß dem einleitenden Teil von Anspruch 1.

Zur Nutzung der Sonnenenergie werden seit längerem Solarkollektoren, beispielsweise zur Erzeugung von Heißwasser oder zur Gewinnung von elektrischer Energie, eingesetzt, die zumeist starr am Süddach von Einzelhäusern montiert werden. Zur Erhöhung des Wirkungsgrades solcher Anlagen werden zusätzlich optische Konzentratoren in Form von Linsen oder Spiegeln bzw. Reflektoren vorgesehen, welche die einfallende Strahlung zum Absorptionskörper hin bündeln, wobei die Anordnung dem Stand der Sonne automatisch nachgeführt wird. Die Absorptionskörper sind zumeist als Rohre ausgebildet und dementsprechend sind breite, wannenförmige Reflektoren vorgesehen, vgl. z.B. US 4 505 263 A oder DE 28 07 804 A. Für höhere thermische Leistungen wird entweder eine Vielzahl solcher Kollektoren vorgesehen, oder es ist nur ein Absorptionskörper vorgesehen, der durch eine Vielzahl von nachführbaren Spiegeln bzw. Reflektoren angestrahlt wird, die in relativ großer Entfernung vom Absorptionskörper angeordnet sind.

Aus der FR 2 446 451 A ist ein Solarkollektor bekannt, wobei vor dem kardanisch gelagerten parabolischen Rund-Reflektor ein Behälter mittels einer vor dem Reflektor befindlichen sperrigen oder aber instabilen Aufhängungseinrichtung angebracht ist. In der Mitte des Reflektors ist eine Öffnung vorgesehen, die zur genauen Ausrichtung des Reflektors zur Sonne dient. Einen ähnlichen Solarkollektor mit kardanisch gelagertem und parabolischem Rundspiegel zeigt die GB 1 578 996 A, während in der DE 29 26 232 A1 ein kegelstumpfförmig ausgebildeter und kardanisch gelagerter Reflektor beschrieben wird. In beiden Fällen ist hierbei jedoch der Absorptionskörper vor dem Reflektor mit diesem verbunden.

Aufgabe der Erfindung ist die Schaffung eines Solarkollektors, insbesondere für kleine bis mittlere thermische Leistungen, der eine baulich einfache, kompakte Konstruktion und Halterung des Absorptionskörpers in Verbindung mit einem guten Wirkungsgrad aufweist.

Diese Aufgabe wird erfindungsgemäß durch die im Anspruch 1 definierten Merkmale gelöst. Vorteilhafte Ausführungsformen und Weiterbildungen sind in den Unteransprüchen angegeben.

Beim vorliegenden Solarkollektor braucht nur der Reflektor dem Sonnenstand nachgeführt zu werden, so daß Dichtungsprobleme, die bei drehbaren Absorptionskörpern beim Übergang zur Zu- und Ableitung zum Absorptionskörper auftreten können, eliminiert werden können. Desgleichen können auch fallweise notwendige flexible Leitungen für die Zu- und Ableitung entfallen. Darüber hinaus sind auch vergleichsweise geringe Massen zu bewegen, so daß schwächer dimensionierte Lager- und Antriebseinrichtungen ausreichen. Der Reflektor ist exakt auf den Stand der Sonne ausrichtbar, und zwar sowohl in Ost-West-Richtung, als auch zum jeweiligen Höhenstand der Sonne. Durch die Ausnehmung wird genügend Freiraum für die Anordnung des Absorptionskörpers bzw. für den Schwenkbereich des Reflektors geschaffen. Insgesamt wird so eine stabile nichtsdestoweniger vor sperrigen Teilen freie Ausbildung ermöglicht, bei der der Reflektor die gesamte auftreffende Sonnenstrahlung unbehindert zum Absorptionskörper reflektieren kann, so daß auch ein guter Wirkungsgrad erzielt wird.

Eine hinsichtlich der Reflektor-Lagerung besonders vorteilhafte und einfache Ausbildung besteht darin, daß das Kardanlager aus einer den Reflektor tragenden inneren Ringhalterung und einer äußeren Halbringhalterung besteht, wobei die innere Ringhalterung um eine erste Achse schwenkbar in der äußeren Halbringhalterung gelagert ist, und die äußere Halbringhalterung um eine zweite, zur ersten senkrechten Achse schwenkbar in einer Montagehalterung gelagert ist, und wobei je ein Stellmotor zur Verschwenkung der inneren Ringhalterung bzw. der äußeren Halbringhalterung vorgesehen ist. Durch diese raumsparende Konstruktion können mehrere Solarkollektoren unmittelbar neben- und übereinander auf einer relativ kleinen Fläche untergebracht werden.

Hierbei ist es auch für eine einfache Lagerung von Vorteil, wenn die innere Ringhalterung über Lagerbolzen in Lagerbuchsen der äußeren Halbringhalterung gelagert ist, und wenn die äußere Halbringhalterung über einen Lagerbolzen in einer Lagerbuchse der Montagehalterung gelagert ist; weiters ist es hier günstig, wenn ein Lagerbolzen der inneren Ringhalterung ein Schneckenrad mit einer Schnecke trägt, die mit einem Stellmotor verbunden ist, und der Lagerbolzen der äußeren Halbringhalterung ein Schneckenrad mit einer Schnecke trägt, die mit dem anderen Stellmotor verbunden ist. Durch das Schneckengetriebe wird bei geringem Aufwand eine besonders feinfühlige und exakte Nachführung des Reflektors ermöglicht.

Eine einfache und zweckmäßige Verbindung des Reflektors mit dem Kardanlager wird ermöglicht, wenn der Reflektor an der inneren Ringhalterung über Verbindungsstifte befestigt ist. Hierdurch wird eine zuverlässige Verbindung zwischen dem Reflektor und dem Kardanlager ohne eine merkliche Gewichtszunahme der Konstruktion erzielt.

Für die automatische Nachführung der Reflektoren hat es sich als vorteilhaft erwiesen, wenn beim Reflektor zumindest ein Lichtsensor zur Gewinnung eines Regelsignals für die automatische Reflektor-Nachführung angeordnet ist. Über das von den Lichtsensoren abgegebene Signal können die Stellmotoren in einfacher Weise über eine Regelschaltung entsprechend angesteuert werden. An sich wäre es aber auch denkbar, die Nachführung mit einem Uhrwerk zu koppeln, so daß der oder die Reflektor(en) einfach tageszeitabhängig nachgeführt, d.h. verschwenkt, wird bzw. werden.

Die Erfindung wird nachfolgend anhand eines in der Zeichnung dargestellten bevorzugten Ausführungsbeispieles noch weiter erläutert. Es zeigen:
Fig.1 einen Solarkollektor mit einem kugelförmigen Absorptionskörper und einem parabolischen Rundspiegel-Reflektor in Vorderansicht; und
Fig.2 den Solarkollektor nach Fig.1 im Schnitt nach der Linie II-II in Fig.1.

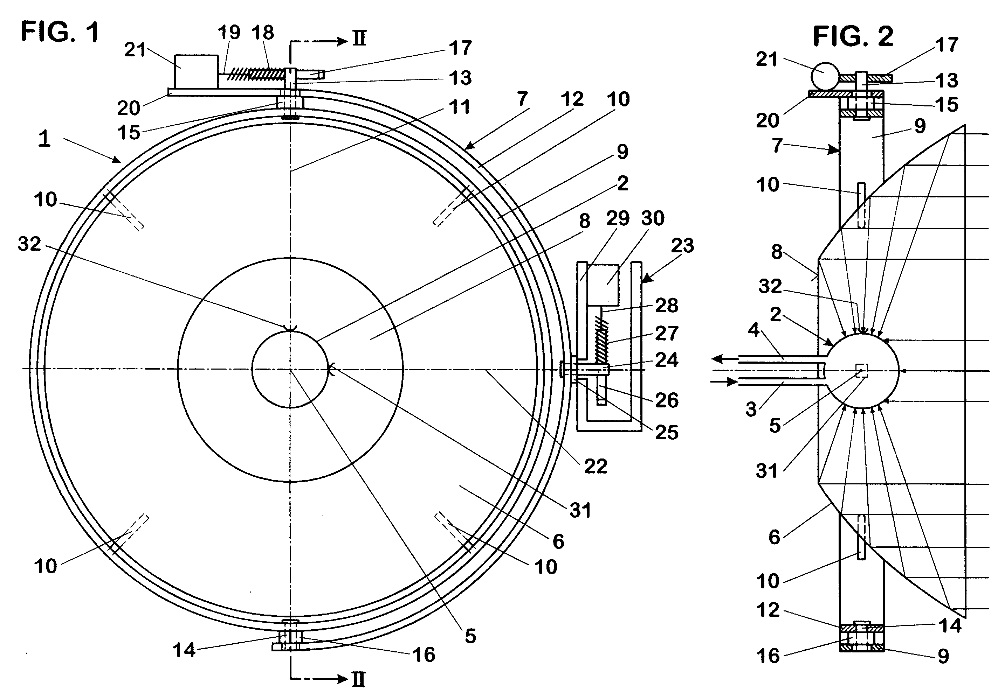

Der in Fig.1 und 2 dargestellte Solarkollektor 1 weist einen hohlkugelförmigen Absorptionskörper 2 aus Glas, Kunststoff oder Metall auf, der auf seiner Rückseite mit einer Zuleitung 3 und einer Ableitung 4 für ein aufzuheizendes Medium, z.B. Wasser, versehen ist, wobei der Mittelpunkt des Absorptionskörpers 2 im Brennpunkt 5 eines parabolischen Rundspiegel-Reflektors 6 angeordnet ist (s. Fig.2). Der Absorptionskörper 2 ist hierbei auf einer Halterung (nicht dargestellt), die auch die Leitungen 3, 4 trägt, starr befestigt, während der Reflektor 6 in einem Kardanlager 7 allseitig schwenkbar befestigt bzw. aufgehängt und mittig mit einer kreisförmigen Ausnehmung 8 versehen ist, um einen Freiraum für die Anordnung des Absorptionskörpers 2 bzw. für den Schwenkbereich des Reflektors 6 zu schaffen. Die Ausnehmung 8 kann auch in Ost-West-Richtung elliptisch verbreitert ausgebildet sein.

Das Kardanlager 7 besteht aus einer inneren Ringhalterung 9, die über vier diametral versetzte Verbindungsstifte 10 den Reflektor 6 trägt. Die Verbindungsstifte 10 können mit dem Reflektor 6 bzw. der Ringhalterung 9 durch Verstiftung, Vernietung, Verschraubung oder durch Klebung verbunden sein. Der Haltering 9 ist um eine erste Achse 11 (z.B. N-S-Achse) schwenkbar in einer äußeren Halbringhalterung 12 gelagert, und zwar über zwei Lagerbolzen 13, 14, die in Lagerbuchsen 15, 16 der Halbringhalterung 12 gelagert sind. Der in Fig.1 obere Lagerbolzen 15 steht von der Halbringhalterung 12 frei nach außen vor und trägt ein Schneckenrad 17 für eine Schnecke 18, die auf einer Welle 19 eines auf einem verlängerten Arm 20 der Halbringhalterung 12 angeordneten Stellmotors 21 fixiert ist. Die Halbringhalterung 12 ist ihrerseits um eine zweite, zur ersten senkrechten Achse 22 (z.B. O-W-Achse) in einer U-förmigen Montagehalterung 23 schwenkbar gelagert, und zwar über einen Lagerbolzen 24, der in einer Lagerbuchse 25 der Montagehalterung 23 gelagert ist. Dieser Lagerbolzen 24 ragt in die Montagehalterung 23 hinein und trägt ein Schneckenrad 26 für eine Schnecke 27, die auf der Welle 28 eines auf einem Schenkel 29 der Montagehalterung 23 angeordneten Stellmotors 30 fixiert ist. Die Montagehalterung 23 kann z.B. am Dach oder an der Wand eines Gebäudes befestigt werden.

Beim Absorptionskörper 2 sind Lichtsensoren 31, 32 angeordnet, wobei der eine Sensor 31 für die O-W-Steuerung (Verschwenken um die Achse 11 für maximalen Lichteinfall) und der andere Sensor 32 für die N-S-Steuerung (Verschwenken um die Achse 22, bis der maximale Lichteinfall gegeben ist) verantwortlich ist.

Über die von den Lichtsensoren 31, 32 abgegebenen Signale werden die Stellmotoren 21, 30 über eine Regelschaltung (nicht dargestellt) derart angesteuert, daß der Reflektor 6 dem jeweiligen tages- und jahreszeitlich bedingten Sonnenstand nachgeführt wird und somit stets ein Maximum an Strahlung auf den Absorptionskörper 2 auftrifft. Hierbei kann das im Absorptionskörper 2 zirkulierende Wasser auf Brauchwassertemperatur, oder sogar auf über 100°C erhitzt werden, so daß Dampf entsteht, der zum Antrieb einer Dampfturbine verwendet werden kann, worauf der Dampf kondensiert und das Kondenswasser über die Zuleitung 3 dem Absorptionskörper 2 wieder zurückgeführt wird.

Alternativ kann vorgesehen werden, daß der jeweilige Stellmotor als Zeituhr fungierend ständig eingeschaltet ist. Zur Anpassung an den jahreszeitlich bedingten unterschiedlichen Höhenstand der Sonne kann der Schwenkwinkel des Reflektors 6 verändert werden.

Die Motorsteuerung kann auch so ausgelegt sein, daß in der Phase des Erwärmens eine maximale Sonneneinstrahlung herbeigeführt wird, daß aber bei Erreichung der gewünschten hohen Temperatur auf eine Einstellung der Reflektoren umgestellt wird, bei der die Sonnenenergie nur zum Teil genutzt wird, um so einen Überhitzungsschutz zu erzielen.

## Patentansprüche

1. Solarkollektor (1) mit einem kardanisch gelagerten und automatisch nachführbaren parabolischen Rund-Reflektor (6) zum Bündeln der einfallenden Strahlung auf einen starr angeordneten Absorptionskörper (2), dadurch gekennzeichnet, daß der Absorptionskörper (2) eine Hohlkugelform aufweist, und daß der Reflektor (6) mit einer Ausnehmung (8) für die Halterung des Absorptionskörpers (2) und den Durchlaß seiner Anschlußleitungen (3, 4) versehen und an einem Kardanlager (7) allseitig schwenkbar befestigt ist.

2. Solarkollektor nach Anspruch 1, dadurch gekennzeichnet, daß das Kardanlager (7) aus einer den Reflektor (6) tragenden inneren Ringhalterung (9) und einer äußeren Halbringhalterung (12) besteht, wobei die innere Ringhalterung (9) um eine erste Achse (11) schwenkbar in der äußeren Halbringhalterung (12) gelagert ist, und die äußere Halbringhalterung (12) um eine zweite, zur ersten senkrechten Achse (22) schwenkbar in einer Montagehalterung (23) gelagert ist, und wobei je ein Stellmotor (21, 30) zur Verschwenkung der inneren Ringhalterung (9) bzw. der äußeren Halbringhalterung (12) vorgesehen ist.

3. Solarkollektor nach Anspruch 2, dadurch gekennzeichnet, daß die innere Ringhalterung (9) über Lagerbolzen (13, 14) in Lagerbuchsen (15, 16) der äußeren Halbringhalterung (12) gelagert ist, und daß die äußere Halbringhalterung (12) über einen Lagerbolzen (24) in einer Lagerbuchse (25) der Montagehalterung (23) gelagert ist.

4. Solarkollektor nach Anspruch 3, dadurch gekennzeichnet, daß ein Lagerbolzen (13) der inneren Ringhalterung (9) ein Schneckenrad (18) mit einer Schnecke (19) trägt, die mit dem einen Stellmotor (21) verbunden ist, und der Lagerbolzen (24) der äußeren Halbringhalterung (12) ein Schneckenrad (26) mit einer Schnecke (27) trägt, die mit dem anderen Stellmotor (30) verbunden ist.

5. Solarkollektor nach einem der Ansprüche 2 bis 4, dadurch gekennzeichnet, daß der Reflektor (6) an der inneren Ringhalterung (9) über Verbindungsstifte (10) befestigt ist.

6. Solarkollektor nach einem der Ansprüche 1 bis 5, dadurch gekennzeichnet, daß beim Reflektor (6) zumindest ein Lichtsensor (31, 32) zur Gewinnung eines Regelsignals für die automatische Reflektor-Nachführung angeordnet ist.
